# EUROPEAN PATENT SPECIFICATION

(11) **EP 4 325 428 B1**
(45) Date of publication and mention of the grant of the patent: **13.08.2025**
(21) Application number: 22215780.2
(22) Date of filing: 22.12.2022
(51) Int. Cl.: G06T 3/4038, G06T 5/50, G06V 10/10

(54) **PHOTOGRAPHING SYSTEM AND METHOD OF IMAGE FUSION**
FOTOGRAFIESYSTEM UND VERFAHREN ZUR BILDFUSION
SYSTÈME DE PHOTOGRAPHIE ET PROCÉDÉ DE FUSION D'IMAGES

(30) Priority: 18.08.2022 TW 111131061
(43) Date of publication of application: 21.02.2024
(73) Proprietor: Wistron Corporation, New Taipei City 22181 (TW)
(72) Inventor: CHEN, Chih-Ming, 22181 New Taipei City (TW); TSAI, Shang-An, 22181 New Taipei City (TW)
(74) Representative: Becker, Eberhard

(56) References cited:
- US-A1- 2022 237 813
- KIRILLOV ALEXANDER ET AL: "Panoptic Segmentation", 2019 IEEE/CVF CONFERENCE ON COMPUTER VISION AND PATTERN RECOGNITION (CVPR), IEEE, 15 June 2019 (2019-06-15), pages 9396 - 9405, XP033686328, DOI: 10.1109/CVPR.2019.00963
- VEYSEL ASLANTAS ET AL: "Extending depth-of-field by image fusion using multi-objective genetic algorithm", INDUSTRIAL INFORMATICS, 2009. INDIN 2009. 7TH IEEE INTERNATIONAL CONFERENCE ON, IEEE, PISCATAWAY, NJ, USA, 23 June 2009 (2009-06-23), pages 331 - 336, XP031504264, ISBN: 978-1-4244-3759-7
- WANG Y ET AL: "MULTISENSOR IMAGE FUSION: CONCEPT, METHOD AND APPLICATION", TECHNICAL REPORT UNIVERSITY OF BREMEN, XX, XX, 1 December 2000 (2000-12-01), pages 1 - 11, XP001187006
- KAUR HARPREET ET AL: "Image Fusion Techniques: A Survey", ARCHIVES OF COMPUTATIONAL METHODS IN ENGINEERING, SPRINGER NETHERLANDS, DORDRECHT, vol. 28, no. 7, 24 January 2021 (2021-01-24), pages 4425 - 4447, XP037616987, ISSN: 1134-3060, [retrieved on 20210124], DOI: 10.1007/S11831-021-09540-7
- BLU T: "ITERATED FILTER BANKS WITH RATIONAL RATE CHANGES CONNECTION WITH DISCRETE WAVELET TRANSFORMS", IEEE TRANSACTIONS ON SIGNAL PROCESSING, IEEE, USA, vol. 41, no. 12, 1 December 1993 (1993-12-01), pages 3232 - 3244, XP000426644, ISSN: 1053-587X, DOI: 10.1109/78.258070

## Description

### BACKGROUND

### Technical Field

The invention relates to a photographing system, and particularly relates to a photographing system and a method of image fusion.

### Description of Related Art

Generally speaking, a photographing system usually has multiple cameras. To photograph a scene, different cameras may capture different parts of the scene separately. Therefore, as long as the captured images are spliced or fused together, a more complete scene image may be obtained.

However, there may be different objects in the scene. When different cameras photograph a same object, the captured images may have a problem of different angles and different image qualities, which causes difficulty in image splicing or fusing, resulting in poor image quality.

US 2022/237813 A1 relates to an image processing method performed on images captured with image capture devices and including images captured from devices with larger aperture lenses and mobile devices with larger aperture lenses. Kirillov Alexander et al.: "Panoptic Segmentation", 2019 IEEE/CVF Conference on Computer Vision and Pattern Recognition (CVPR), IEEE, 15 June 2019, pages 9396-9405, relates to the technical field of panoptic segmentation. Veysel Aslantas et al.: "Extending depth-of field by image fusion using multi-objective genetic algorithm", Industrial informatics, 2009, Indin 2009, 7th IEEE International conference on, IEEE, Piscataway, NJ, USA, 23 June 2009, pages 331-336, relates to the technical field of extending depth-of field by image fusion using multi-objective genetic algorithm. Wang Y et al.: "Multisensor Image Fusion: concept, method and application", Technical Report University of Bremem, XX, XX, 1 December 2000, pages 1-11, relates to the technical field of multi-sensor image fusion. Kaur Harpreet et al.: "Image Fusion Techniques: A Survey", Archives of computational methods in engineering, SPRINGER NETHERLANDS, DORDRECHT, vol. 28, no. 7, 24 January 2021, pages 4425-4447, relates to the image fusion techniques. BLU T: "Iterated filter banks with rational rate changes connection with discrete wavelet transforms", IEEE Transactions on Signal Processing, IEEE, USA, vol. 41, no. 12, 1 December 1993, pages 3232-3244, relates to the technical field of iterated filter banks with rational rate changes connection with discrete wavelet transforms.

### SUMMARY

The invention is set out in the appended set of claims. The following disclosure serves a better understanding of the present invention. The invention is directed to a photographing system and a method of image fusion, where a spliced or fused image has better image quality.

The invention provides a photographing system including a plurality of cameras and a controller. The cameras are configured to photograph a scene to produce a plurality of sub-images. The controller is signal-connected with the cameras for obtaining the sub-images. The controller analyzes the sub-images for obtaining a plurality of objects contained in the scene. After the controller establishes a Pareto set of each of the objects, the controller splices the objects according to the Pareto set of each of the objects for generating an image after a fusion of the sub-images.

The invention also provides a method of image fusion, which includes the following steps. Optimized optical parameters are calculated according to respective optical parameters of a plurality of cameras. A scene is photographed by using the cameras for obtaining a plurality of sub-images. The sub-images are analyzed to obtain a plurality of objects contained in the scene. A Pareto set of each of the objects is established. The objects are spliced according to the Pareto set of each of the objects for generating an image after a fusion of the sub-images.

Based on the above description, in the photographing system and the method of image fusion according to an embodiment of the invention, after the controller establishes the Pareto set of each object, the objects are then spliced to generate the image after fusion of the sub-images, so that in the process of splicing and fusion, the parts with poor image quality are excluded, and the image after fusion of the sub-images has better image quality.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a photographing system photographing a scene according to the invention.
FIG. 2 is a flowchart of a method of image fusion according to the invention.
FIG. 3 is a flowchart of a step of analysing sub-images to obtain objects contained in a scene in FIG. 2.
FIG. 4 is a schematic diagram of obtaining objects contained in a sub-image by analysing a sub-image.
FIG. 5 is a flowchart of a step of establishing a Pareto set of each object in FIG. 2.
FIG. 6 is a flowchart of a step of fusing or splicing objects according to Pareto sets of the objects to generate an image after fusion of the sub-images in FIG. 2.
FIG. 7 is a flowchart of a step of fusing the sub-objects in each object that fall within the Pareto set to form an image after fusion of each object in FIG. 6.

### DESCRIPTION OF THE EMBODIMENTS

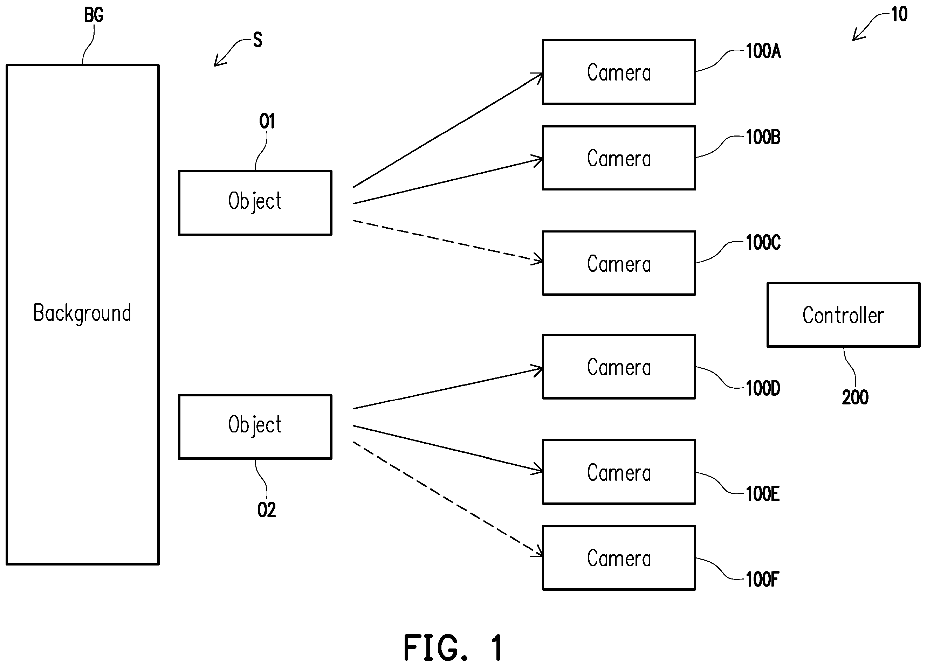

FIG. 1 is a schematic diagram of a photographing system photographing a scene according to the invention. Referring to FIG. 1 first, the invention provides a photographing system 10 and a method of image fusion. In an embodiment, the photographing system 10 includes a plurality of cameras 100A, 100B, 100C, 100D, 100E, 100F and a controller 200. The number of the cameras is for illustration only, and the invention is not limited thereto.

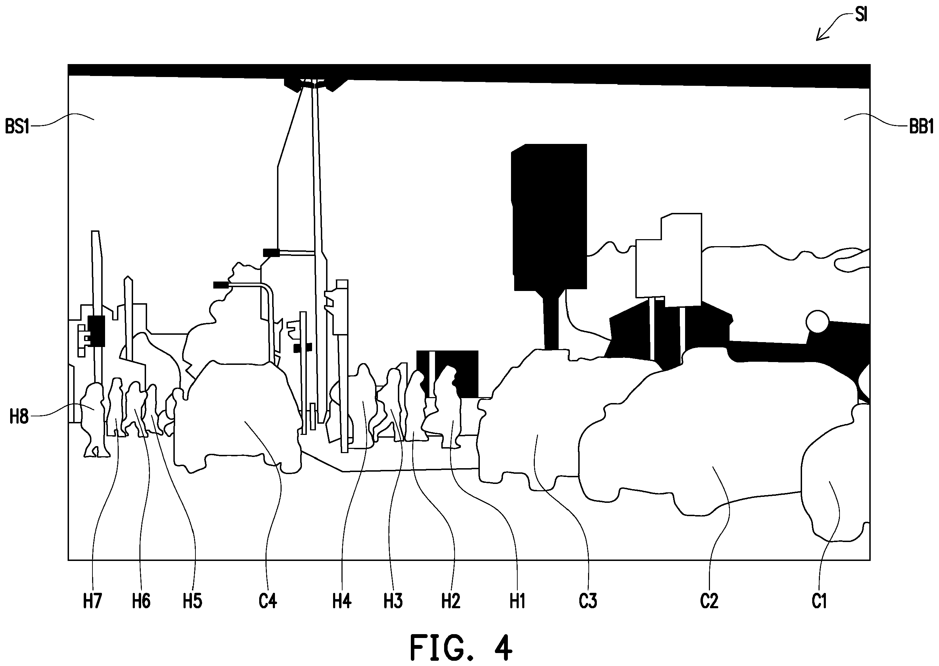

In an embodiment, the cameras 100A, 100B, 100C, 100D, 100E, and 100F may be photosensors of complementary metal-oxide semiconductor (CMOS) or photosensors of charge coupled devices (CCD), but the invention is not limited thereto. The cameras 100A, 100B, 100C, 100D, 100E, and 100F are used to photograph a scene S to generate a plurality of sub-images (for example, sub-images SI shown in FIG. 4). Namely, each of the cameras 100A, 100B, 100C, 100D, 100E, 100F captures the scene S and generates a sub-image.

In an embodiment, the controller 200 includes, for example, a central processing unit (CPU), a microprocessor, a digital signal processor (DSP), a programmable controller, a programmable logic device (PLD) or other similar devices or a combination of these devices, which is not limited by the invention. In addition, in an embodiment, the various functions of the controller 200 may be implemented as a plurality of program codes. These program codes are stored in a memory unit, and the program codes are executed by the controller 200. Alternatively, in an embodiment, the functions of the controller 200 may be implemented as one or a plurality of circuits. The invention does not limit the implementation of the functions of the controller 200 by means of software or hardware.

In addition, in an embodiment, the controller 200 may be disposed in a smart phone, a mobile device, a computer, a notebook computer, a server, an AI server or a cloud server. In another embodiment, the controller 200 may be directly disposed in the cameras 100A, 100B, 100C, 100D, 100E, 100F. However, the invention does not limit the position where the controller 200 is arranged.

In the invention, the controller 200 is signal-connected to the cameras 100A, 100B, 100C, 100D, 100E, and 100F to obtain the sub-images. The controller 200 analyzes the sub-images to obtain a plurality of objects BG, O1, O2 contained in the scene S. Among them, the objects BG, O1, O2 may be divided into flowers, people, cars (such as recreational vehicles, sports cars, convertibles, sport utility vehicles, etc.), backgrounds (such as roads, sky, buildings, etc.), etc. according to types of the objects. For example, the object O1 or O2 in FIG. 1 may be a flower, a person or a car, and the object BG may be a background. The cameras 100A, 100B, and 100C may, for example, photograph the objects BG and O1, and the cameras 100D, 100E, and 100F may, for example, photograph the objects BG and O2. Therefore, after the sub-images captured by the cameras 100A, 100B, 100C, 100D, 100E, and 100F are fused or spliced, a complete image of the scene S may be generated.

However, the image quality of images captured by each of the cameras 100A, 100B, 100C, 100D, 100E and 100F on the objects BG, O1 and O2 may be different. For example, FIG. 1 shows that solid line arrows correspond to better image quality, and dashed line arrows correspond to poor image quality. Namely, the sub-images captured by the cameras 100A and 100B on the object O1 have better image quality, but the sub-image captured by the camera 100C on the object O1 has lower image quality. Similarly, the sub-images captured by the cameras 100D and 100E on the object O2 have better image quality, but the sub-image captured by the camera 100F on the object O2 has lower image quality. If all of the objects O1 in the sub-images captured by the cameras 100A, 100B, and 100C are fused, or if all of the objects O2 in the sub-images captured by the cameras 100D, 100E, and 100F are fused, a complete image of the scene S with good image quality may not be obtained. Therefore, in an embodiment, after the controller 200 establishes a Pareto set of each of the objects BG, O1, O2, for example, the set of Pareto optimal solution is called the Pareto set, the controller 200 splices the objects BG, O1, O2 according to the Pareto sets of the objects BG, O1, O2, so as to generate an image after fusion of the sub-images. When considering the solutions of a given function, there may exist multiple solutions, and some of these solutions may be better than others. Thus, the set of solutions satisfied Pareto optimal solution is called the Pareto set.

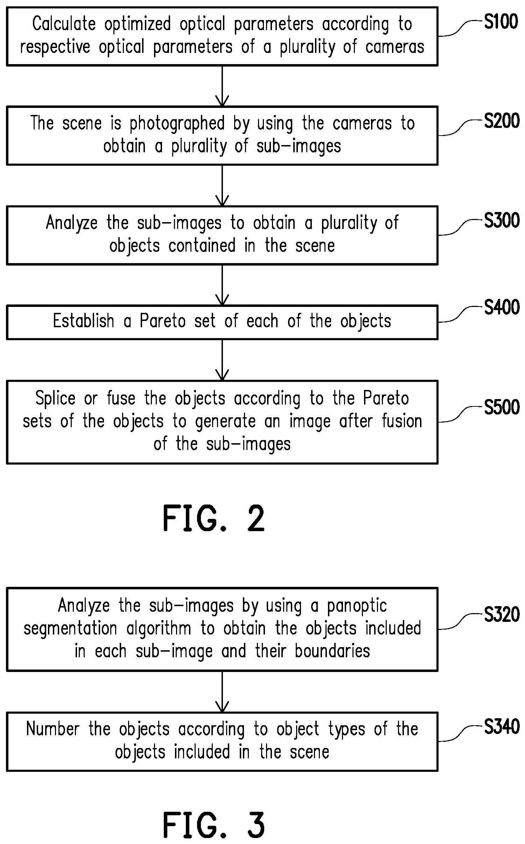

FIG. 2 is a flowchart of a method of image fusion according to the invention. Referring to FIG. 1 and FIG. 2, an embodiment of the invention provides a method of image fusion, which includes the following steps. In step S100, optimized optical parameters of the plurality of cameras 100A, 100B, 100C, 100D, 100E, and 100F are calculated according to their respective optical parameters. In step S200, the scene S is photographed by using the cameras 100A, 100B, 100C, 100D, 100E, and 100F to obtain a plurality of sub-images. In step S300, the sub-images are analyzed to obtain a plurality of objects BG, O1, O2 contained in the scene. In step S400, a Pareto set of each of the objects BG, O1, O2 is established. In step S500, the objects BG, O1, O2 are spliced according to the Pareto sets of the objects BG, O1, O2 to generate an image after fusion of the sub-images.

In an embodiment, the optical parameters of each of the cameras 100A, 100B, 100C, 100D, 100E, 100F include an aperture, a focal length, a sensitivity, a white balance or a resolution. In an embodiment, the optical parameters further include a full well capacity (FWC), a saturation capacity, an absolute sensitivity threshold (AST), a temporal dark noise, a dynamic range, a quantum efficiency (QE), a maximum signal-to-noise ratio (SNRmax), a K-factor, etc.

The following will describe a detailed process of generating the image after fusion of the sub-images by the photographing system 10 and the method of image fusion according to the invention.

FIG. 3 is a flowchart of the step of analyzing the sub-images to obtain the objects contained in the scene in FIG. 2. FIG. 4 is a schematic diagram of obtaining objects contained in a sub-image by analyzing the sub-image. Referring to FIG. 2, FIG. 3 and FIG. 4, in an embodiment, the above-mentioned step S300 includes the following steps. In step S320, a sub-image SI is analyzed by using a panoptic segmentation algorithm, which is an image segmentation algorithm that combines the prediction from both instance and semantic segmentation into a general unified output, to obtain objects BB1, BS1, C1, C2, C3, C4, H1, H2, H3, H4, H5, H6, H7, and H8 and boundaries thereof included in each sub-image SI. In step S340: according to object types of the objects BB1, BS1, C1, C2, C3, C4, H1, H2, H3, H4, H5, H6, H7, and H8 included in the scene S, the objects BB1, BS1, C1, C2, C3, C4, H1, H2, H3, H4, H5, H6, H7, and H8 are numbered.

For example, FIG. 4 illustrates the sub-image SI obtained by one of the cameras 100A, 100B, 100C, 100D, 100E, and 100F by photographing the scene S. The controller 200 may obtain the objects BB1, BS1, C1, C2, C3, C4, H1, H2, H3, H4, H5, H6, H7, and H8 after analyzing the sub-image SI by using the panoptic segmentation algorithm. The objects C1, C2, C3, and C4 are cars. Therefore, the controller 200 may, for example, assign referential numbers car #1, car #2, car #3, and car #4 to the objects C1, C2, C3, and C4, respectively. The objects H1, H2, H3, H4, H5, H6, H7, and H8 are humans. Therefore, the controller 200 may, for example, assign referential numbers person #1, person #2, person #3, person #4, person #5, person #6, person #7, and person #8 to the objects H1, H2, H3, H4, H5, H6, H7, and H8, respectively. Furthermore, the objects BB1 and BS1 are backgrounds, where the object BB1 is a building background, and the object BS1 is a sky background. Therefore, the controller 200 may, for example, assign referential numbers building #1 and sky #1 to the objects BB1 and BS1.

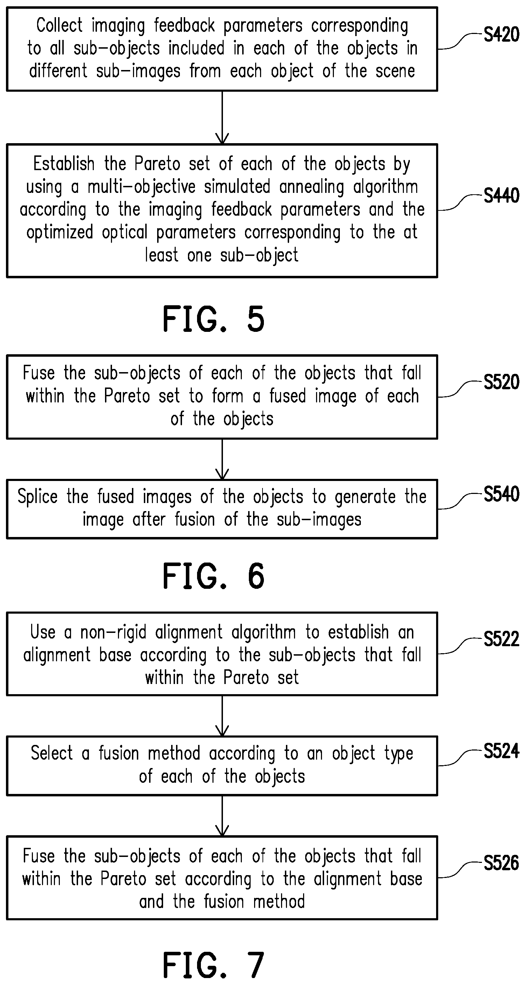

FIG. 5 is a flowchart of the step of establishing the Pareto set of each object in FIG. 2. Referring to FIG. 2 and FIG. 5, in the invention, each of the objects BB1, BS1, C1, C2, C3, C4, H1, H2, H3, H4, H5, H6, H7, and H8 includes at least one sub-object, where each of the sub-objects is an image range in which each of the objects BB1, BS1, C1, C2, C3, C4, H1, H2, H3, H4, H5, H6, H7, and H8 appears in one of the sub-images SI. For example, the object C1 may be captured by some of the cameras 100A, 100B, 100C, 100D, 100E, 100F in the photographing system 10. Namely, not every camera may capture the object C1. Therefore, the sub-object is an image range within each of the sub-images of those cameras that capture the object C1, and the object C1 includes these sub-objects. Taking FIG. 1 as an example, the object O1 may be photographed by the cameras 100A, 100B, and 100C, so that the object O1 includes three sub-objects; and the object O2 may be photographed by the cameras 100D, 100E, and 100F, so that the object O2 includes three sub-objects.

In the invention, the above-mentioned step S400 includes following steps. In a step S420, in each of the objects BB1, BS1, C1, C2, C3, C4, H1, H2, H3, H4, H5, H6, H7, and H8 of the scene S, imaging feedback parameters corresponding to all of the sub-objects contained in each of the objects BB1, BS1, C1, C2, C3, C4, H1, H2, H3, H4, H5, H6, H7, and H8 in different sub-images SI are collected. Each imaging feedback parameter includes an image quality indicator (IQI) and an imaging position indicator (IPI). In step S440, according to the imaging feedback parameters and the optimized optical parameters corresponding to the at least one sub-object, the Pareto set of each of the objects BB1, BS1, C1, C2, C3, C4, H1, H2, H3, H4, H5, H6, H7, and H8 is established by using a multi-objective simulated annealing algorithm, which is a probabilistic technique for approximating the global optimum of a given function.

FIG. 6 is a flowchart of the step of fusing or splicing the objects according to the Pareto sets of the objects to generate the image after fusion of the sub-images in FIG. 2. Referring to FIG. 2 and FIG. 6, in the invention, the above-mentioned step S500 includes following steps. In step S520, the sub-objects falling within the Pareto set in each of the objects BB1, BS1, C1, C2, C3, C4, H1, H2, H3, H4, H5, H6, H7, H8 are fused to form a fused image of each of the objects BB1, BS1, C1, C2, C3, C4, H1, H2, H3, H4, H5, H6, H7, and H8. In step S540, the fused images of the objects BB1, BS1, C1, C2, C3, C4, H1, H2, H3, H4, H5, H6, H7, and H8 are spliced to generate an image after fusion of the sub-images SI.

Taking FIG. 1 as an example, in the sub-objects of the object O1, the sub-object corresponding to the camera 100C may have a poor image quality indicator or a poor imaging position indicator due to, for example, out-of-focus and other reasons. Therefore, the controller 200 preferably only fuses the two sub-objects corresponding to the cameras 100A and 100B. Namely, the two sub-objects corresponding to the cameras 100A and 100B among the sub-objects of the object O1 will fall within the Pareto sets. Similarly, in the sub-objects of the object O2, the sub-object corresponding to the camera 100F may have a poor image quality indicator or a poor imaging position indicator due to, for example, out-of-focus and other reasons. Therefore, the controller 200 preferably only fuses the two sub-objects corresponding to the cameras 100D and 100E. Namely, the two sub-objects corresponding to the cameras 100D and 100E among the sub-objects of the object O2 will fall within the Pareto sets. A lower value of the image quality indicator or a lower value of the imaging position indicator represents better image quality; conversely, a higher value of the image quality indicator or a higher value of the imaging position indicator represents poor image quality.

FIG. 7 is a flowchart of the step of fusing the sub-objects in each object that fall within the Pareto set to form an image after fusion of each object in FIG. 6. Referring to FIG. 6 and FIG. 7, in an embodiment, the above-mentioned step S520 includes following steps. In step S522, a non-rigid alignment algorithm, which is an image alignment algorithm that aligns between the non-rigid objects, is used to establish an alignment base according to the sub-objects that fall within the Pareto set. In step S524, a fusion method is selected according to an object type of each of the objects BB1, BS1, C1, C2, C3, C4, H1, H2, H3, H4, H5, H6, H7, and H8. In step S526, according to the alignment base and the fusion method, the sub-objects in each of the objects BB1, BS1, C1, C2, C3, C4, H1, H2, H3, H4, H5, H6, H7 and H8 that fall within the Pareto sets are fused.

Taking FIG. 1 as an example, the cameras 100A, 100B, 100C, 100D, 100E, and 100F may respectively photograph the scene S at different angles or at different positions. Therefore, the controller 200 uses the non-rigid alignment algorithm to establish an alignment base between different sub-objects, and according to the object types of the objects O1 and O2, fuses the two sub-objects corresponding to the cameras 100A and 100B to form a fused image of the object O1, and fuses the two sub-objects corresponding to the cameras 100D and 100E to form a fused image of the object O2.

In an embodiment, the above-mentioned fusion method includes discrete wavelet transform, uniform rational filter bank, or Laplacian pyramid.

In summary, in the photographing system and the method of image fusion according to an embodiment of the invention, cameras are used to photograph a scene to obtain sub-images, and then a controller is used to analyze the sub-images to obtain objects included in the scene. After the controller establishes a Pareto set of each object, the objects are spliced to generate an image after fusion of the sub-images. Since the parts with poor image quality are excluded in the process of splicing and fusion, the image after fusion of the sub-images has better image quality. In addition, the cameras are not limited to black and white cameras or color cameras, so that the controller may use gray levels of pixels in a black and white image to help modifying color values of pixels in a color image, thereby improving the image quality. The controller may also use a black and white camera to provide higher image resolution, thereby increasing the image resolution.

In addition, since the controller also uses the non-rigid alignment algorithm to align the sub-objects, and selects the fusion method according to the object type of the object, therefore, the photographing system and the method of image fusion according to the embodiments of the invention can convert the cameras into general-purpose cameras capable of processing various scenes.

## Claims

1. A photographing system (10), comprising:
a plurality of cameras (100A, 100B, 100C, 100D, 100E, 100F), photographing a scene (S) for producing a plurality of sub-images (SI); and
a controller (200), signal-connected with the cameras (100A, 100B, 100C, 100D, 100E, 100F) for obtaining the sub-images (SI),
wherein the controller (200) analyzes the sub-images (SI) for obtaining a plurality of objects (BG, O1, O2) contained in the scene (S), and the controller (200) establishes a Pareto set of each of the objects (BG, O1, O2), the controller (200) splices the objects (BG, O1, O2) according to the Pareto set of each of the objects (BG, O1, O2) for generating a complete image of the scene (S) after a fusion of the sub-images (SI), each of the objects (BB1, BS1, C1, C2, C3, C4, H1, H2, H3, H4, H5, H6, H7, H8) comprises at least one sub-object, and each sub-object is an image range in which the respective object (BB1, BS1, C1, C2, C3, C4, H1, H2, H3, H4, H5, H6, H7, H8) appears within a respective sub-image of the sub-images (SI) of the cameras (100A, 100B, 100C, 100D, 100E, 100F) which capture the object (BB1, BS1, C1, C2, C3, C4, H1, H2, H3, H4, H5, H6, H7, H8),
wherein the controller (200) calculates optimized optical parameters according to respective optical parameters of the cameras (100A, 100B, 100C, 100D, 100E, 100F); and
the controller (200) collects imaging feedback parameters corresponding to all the sub-objects included in each of the objects (BB1, BS1, C1, C2, C3, C4, H1, H2, H3, H4, H5, H6, H7, H8) in different sub-images (SI) from each of the objects (BB1, BS1, C1, C2, C3, C4, H1, H2, H3, H4, H5, H6, H7, H8) of the scene (S), and establishes the Pareto set of each of the objects (BB1, BS1, C1, C2, C3, C4, H1, H2, H3, H4, H5, H6, H7, H8) by using a multi-objective simulated annealing algorithm according to the imaging feedback parameters and the optimized optical parameters corresponding to the sub-object,
wherein each of the imaging feedback parameters comprises an image quality indicator and an imaging position indicator,
wherein the controller (200) fuses the sub-objects of each of the objects (BB1, BS1, C1, C2, C3, C4, H1, H2, H3, H4, H5, H6, H7, H8) that fall within the Pareto set for forming a plurality of fused images of the objects (BB1, BS1, C1, C2, C3, C4, H1, H2, H3, H4, H5, H6, H7, H8), and splices the fused images of the objects (BB1, BS1, C1, C2, C3, C4, H1, H2, H3, H4, H5, H6, H7, H8) for generating the complete image of the scene (S) after a fusion of the sub-images (SI).

2. The photographing system (10) as claimed in claim 1, wherein the controller (200) analyzes the sub-images (SI) by using a panoptic segmentation algorithm for obtaining the objects (BB1, BS1, C1, C2, C3, C4, H1, H2, H3, H4, H5, H6, H7, H8) and boundaries thereof included in each of the sub-images (SI), and numbers the objects (BB1, BS1, C1, C2, C3, C4, H1, H2, H3, H4, H5, H6, H7, H8) according to object types of the objects (BB1, BS1, C1, C2, C3, C4, H1, H2, H3, H4, H5, H6, H7, H8) included in the scene (S) for obtaining the objects (BB1, BS1, C1, C2, C3, C4, H1, H2, H3, H4, H5, H6, H7, H8) included in the scene (S).

3. The photographing system (10) as claimed in claim 1, wherein the optical parameters of each of the cameras (100A, 100B, 100C, 100D, 100E, 100F) comprise an aperture, a focal length, a sensitivity, a white balance, or a resolution.

4. The photographing system (10) as claimed in claim 1, wherein the controller (200) uses a non-rigid alignment algorithm for establishing an alignment base according to the sub-objects that fall within the Pareto set, and then selects a fusion method according to an object type of each of the objects (BB1, BS1, C1, C2, C3, C4, H1, H2, H3, H4, H5, H6, H7, H8), and fuses the sub-objects of each of the objects (BB1, BS1, C1, C2, C3, C4, H1, H2, H3, H4, H5, H6, H7, H8) that fall within the Pareto set according to the alignment base and the fusion method.

5. The photographing system (10) as claimed in claim 1, wherein the optical parameters of each of the cameras (100A, 100B, 100C, 100D, 100E, 100F) comprise a full well capacity, a saturation capacity, a temporal dark noise, a dynamic range, a quantum efficiency, or a K-factor.

6. A method of image fusion, comprising:
calculating optimized optical parameters according to respective optical parameters of a plurality of cameras (100A, 100B, 100C, 100D, 100E, 100F);
photographing a scene (S) by using the cameras (100A, 100B, 100C, 100D, 100E, 100F) for obtaining a plurality of sub-images (SI);
analyzing the sub-images (SI) to obtain a plurality of objects (BG, O1, O2) contained in the scene (S);
establishing a Pareto set of each of the objects (BG, O1, O2); and
splicing the objects (BG, O1, O2) according to the Pareto set of each of the objects (BG, O1, O2) for generating a complete image of the scene (S) after a fusion of the sub-images (SI), wherein each of the objects (BB1, BS1, C1, C2, C3, C4, H1, H2, H3, H4, H5, H6, H7, H8) comprises at least one sub-object, and each sub-object is an image range in which the respective object (BB1, BS1, C1, C2, C3, C4, H1, H2, H3, H4, H5, H6, H7, H8) appears within a respective sub-image of the sub-images (SI) of the cameras (100A, 100B, 100C, 100D, 100E, 100F) which capture the object (BB1, BS1, C1, C2, C3, C4, H1, H2, H3, H4, H5, H6, H7, H8), and the step of establishing the Pareto set of each of the objects (BB1, BS1, C1, C2, C3, C4, H1, H2, H3, H4, H5, H6, H7, H8) comprises:
collecting imaging feedback parameters corresponding to all the sub-objects included in each of the objects (BB1, BS1, C1, C2, C3, C4, H1, H2, H3, H4, H5, H6, H7, H8) in different sub-images (SI) from each of the objects (BB1, BS1, C1, C2, C3, C4, H1, H2, H3, H4, H5, H6, H7, H8) of the scene (S); and
establishing the Pareto set of each of the objects (BB1, BS1, C1, C2, C3, C4, H1, H2, H3, H4, H5, H6, H7, H8) by using a multi-objective simulated annealing algorithm according to the imaging feedback parameters and the optimized optical parameters corresponding to the sub-object,
wherein each of the imaging feedback parameters comprises an image quality indicator and an imaging position indicator,
wherein the step of splicing the objects (BB1, BS1, C1, C2, C3, C4, H1, H2, H3, H4, H5, H6, H7, H8) according to the Pareto set of each of the objects (BB1, BS1, C1, C2, C3, C4, H1, H2, H3, H4, H5, H6, H7, H8) for generating the image after a fusion of the sub-images (SI) comprises:
fusing the sub-objects of each of the objects (BB1, BS1, C1, C2, C3, C4, H1, H2, H3, H4, H5, H6, H7, H8) that fall within the Pareto set for forming a plurality of fused images of the objects (BB1, BS1, C1, C2, C3, C4, H1, H2, H3, H4, H5, H6, H7, H8); and
splicing the fused images of the objects (BB1, BS1, C1, C2, C3, C4, H1, H2, H3, H4, H5, H6, H7, H8) for generating the complete image of the scene (S) after a fusion of the sub-images (SI).

7. The method of image fusion as claimed in claim 6, wherein the step of analyzing the sub-images (SI) for obtaining the objects (100A, 100B, 100C, 100D, 100E, 100F) contained in the scene (S) comprises:
analyzing the sub-images (SI) by using a panoptic segmentation algorithm for obtaining the objects (BB1, BS1, C1, C2, C3, C4, H1, H2, H3, H4, H5, H6, H7, H8) and boundaries thereof included in each of the sub-images (SI); and
numbering the objects (BB1, BS1, C1, C2, C3, C4, H1, H2, H3, H4, H5, H6, H7, H8) according to object types of the objects (BB1, BS1, C1, C2, C3, C4, H1, H2, H3, H4, H5, H6, H7, H8) included in the scene (S).

8. The method of image fusion as claimed in claim 6, wherein each of the cameras (100A, 100B, 100C, 100D, 100E, 100F) is a photosensor of complementary metal-oxide semiconductor, or a photosensor of charge coupled devices.

9. The method of image fusion as claimed in claim 6, wherein the step of fusing the sub-objects of each of the objects (BB1, BS1, C1, C2, C3, C4, H1, H2, H3, H4, H5, H6, H7, H8) that fall within the Pareto set to form the fused image of each of the objects (BB1, BS1, C1, C2, C3, C4, H1, H2, H3, H4, H5, H6, H7, H8) comprises:
using a non-rigid alignment algorithm for establishing an alignment base according to the sub-objects that fall within the Pareto set;
selecting a fusion method according to an object type of each of the objects (BB1, BS1, C1, C2, C3, C4, H1, H2, H3, H4, H5, H6, H7, H8); and
fusing the sub-objects of each of the objects (BB1, BS1, C1, C2, C3, C4, H1, H2, H3, H4, H5, H6, H7, H8) that fall within the Pareto set according to the alignment base and the fusion method.

10. The method of image fusion as claimed in claim 9, wherein the fusion method comprises discrete wavelet transform, uniform rational filter bank, or Laplacian pyramid.

## Patentansprüche

1. Fotografiersystem (10), umfassend:
mehrere Kameras (100A, 100B, 100C, 100D, 100E, 100F), die eine Szene (S) fotografieren, um mehrere Teilbilder (SI) zu erzeugen; und
einen Controller (200), der mit den Kameras (100A, 100B, 100C, 100D, 100E, 100F) signalverbunden ist, um die Teilbilder (SI) zu erhalten,
wobei der Controller (200) die Teilbilder (SI) analysiert, um mehrere Objekte (BG, O1, O2) zu erhalten, die in der Szene (S) enthalten sind, und der Controller (200) eine Pareto-Menge jedes der Objekte (BG, O1, O2) erstellt, der Controller (200) die Objekte (BG, O1, O2) gemäß der Pareto-Menge jedes der Objekte (BG, O1, O2) nach einer Fusion der Teilbilder (SI) zusammenfügt, um ein vollständiges Bild der Szene (S) zu generieren, jedes der Objekte (BB1, BS1, C1, C2, C3, C4, H1, H2, H3, H4, H5, H6, H7, H8) mindestens ein Teilobjekt umfasst, und jedes Teilobjekt ein Bildbereich ist, in dem das jeweilige Objekt (BB1, BS1, C1, C2, C3, C4, H1, H2, H3, H4, H5, H6, H7, H8) innerhalb eines jeweiligen Teilbildes der Teilbilder (SI) der Kameras (100A, 100B, 100C, 100D, 100E, 100F), die das Objekt (BB1, BS1, C1, C2, C3, C4, H1, H2, H3, H4, H5, H6, H7, H8) aufnehmen, erscheint,
wobei der Controller (200) optimierte optische Parameter gemäß den jeweiligen optischen Parametern der Kameras (100A, 100B, 100C, 100D, 100E, 100F) berechnet; und
der Controller (200) Bildgebungsrückkopplungsparameter, die allen Teilobjekten entsprechen, die in jedem der Objekte (BB1, BS1, C1, C2, C3, C4, H1, H2, H3, H4, H5, H6, H7, H8) in verschiedenen Teilbildern (SI) enthalten sind, von jedem der Objekte (BB1, BS1, C1, C2, C3, C4, H1, H2, H3, H4, H5, H6, H7, H4, H5, H6, H7, H8) der Szene (S) sammelt und die Pareto-Menge jedes der Objekte (BB1, BS1, C1, C2, C3, C4, H1, H2, H3, H4, H5, H6, H7, H8) unter Verwendung eines Multi-Objective Simulated Annealing-Algorithmus gemäß den Bildgebungsrückkopplungsparametern und den optimierten optischen Parametern, die dem Teilobjekt entsprechen, erstellt,
wobei jeder der Bildgebungsrückkopplungsparameter einen Bildqualitätsindikator und einen Bildgebungspositionsindikator umfasst,
wobei der Controller (200) die Teilobjekte jedes der Objekte (BB1, BS1, C1, C2, C3, C4, H1, H2, H3, H4, H5, H6, H7, H8), die in die Pareto-Menge fallen, fusioniert, um mehrere fusionierte Bilder der Objekte (BB1, BS1, C1, C2, C3, C4, H1, H2, H3, H4, H5, H6, H7, H8) zu bilden, und die fusionierten Bilder der Objekte (BB1, BS1, C1, C2, C3, C4, H1, H2, H3, H4, H5, H6, H7, H8) zusammenfügt, um das vollständige Bild der Szene (S) nach einer Fusion der Teilbilder (SI) zu generieren.

2. Fotografiersystem (10) nach Anspruch 1, wobei der Controller (200) die Teilbilder (SI) unter Verwendung eines panoptischen Segmentierungsalgorithmus analysiert, um die Objekte (BB1, BS1, C1, C2, C3, C4, H1, H2, H3, H4, H5, H6, H7, H8) und deren Grenzen zu erhalten, die in jedem der Teilbilder (SI) enthalten sind, und die Objekte (BB1, BS1, C1, C2, C3, C4, H1, H2, H3, H4, H5, H6, H7, H8) gemäß den Objekttypen der Objekte (BB1, BS1, C1, C2, C3, C4, H1, H2, H3, H4, H5, H6, H7, H8), die in der Szene (S) enthalten sind, nummeriert, um die Objekte (BB1, BS1, C1, C2, C3, C4, H1, H2, H3, H4, H5, H6, H7, H8), die in der Szene (S) enthalten sind, zu erhalten.

3. Fotografiersystem (10) nach Anspruch 1, wobei die optischen Parameter jeder der Kameras (100A, 100B, 100C, 100D, 100E, 100F) eine Blende, eine Brennweite, eine Empfindlichkeit, einen Weißabgleich oder eine Auflösung umfassen.

4. Fotografiersystem (10) nach Anspruch 1, wobei der Controller (200) einen nicht-starren Ausrichtungsalgorithmus zum Erstellen einer Ausrichtungsbasis gemäß den Teilobjekten, die in die Pareto-Menge fallen, verwendet und dann ein Fusionsverfahren gemäß einem Objekttyp jedes der Objekte (BB1, BS1, C1, C2, C3, C4, H1, H2, H3, H4, H5, H6, H7, H8) auswählt und die Teilobjekte jedes der Objekte (BB1, BS1, C1, C2, C3, C4, H1, H2, H3, H4, H5, H6, H7, H8), die in die Pareto-Menge fallen, gemäß der Ausrichtungsbasis und der Fusionsmethode fusioniert.

5. Fotografiersystem (10) nach Anspruch 1, wobei die optischen Parameter jeder der Kameras (100A, 100B, 100C, 100D, 100E, 100F) eine Full-Well-Kapazität, eine Sättigungskapazität, ein zeitliches Dunkelrauschen, einen Dynamikbereich, eine Quanteneffizienz oder einen K-Faktor umfassen.

6. Verfahren zur Bildfusion, umfassend:
Berechnen optimierter optischer Parameter gemäß jeweiligen optischen Parametern mehrerer Kameras (100A, 100B, 100C, 100D, 100E, 100F);
Fotografieren einer Szene (S) unter Verwendung der Kameras (100A, 100B, 100C, 100D, 100E, 100F), um mehrere Teilbilder (SI) zu erhalten;
Analysieren der Teilbilder (SI), um mehrere Objekte (BG, O1, O2), die in der Szene (S) enthalten sind, zu erhalten;
Erstellen einer Pareto-Menge jedes der Objekte (BG, O1, O2); und
Zusammenfügen der Objekte (BG, O1, O2) gemäß der Pareto-Menge jedes der Objekte (BG, O1, O2) nach einer Fusion der Teilbilder (SI), um ein vollständiges Bild der Szene (S) zu generieren, wobei jedes der Objekte (BB1, BS1, C1, C2, C3, C4, H1, H2, H3, H4, H5, H6, H7, H8) mindestens ein Teilobjekt umfasst, und jedes Teilobjekt ein Bildbereich ist, in dem das jeweilige Objekt (BB1, BS1, C1, C2, C3, C4, H1, H2, H3, H4, H5, H6, H7, H8) innerhalb eines jeweiligen Teilbildes der Teilbilder (SI) der Kameras (100A, 100B, 100C, 100D, 100E, 100F), die das Objekt (BB1, BS1, C1, C2, C3, C4, H1, H2, H3, H4, H5, H6, H7, H8) aufnehmen, erscheint, und der Schritt des Erstellens der Pareto-Menge jedes der Objekte (BB1, BS1, C1, C2, C3, C4, H1, H2, H3, H4, H5, H6, H7, H8) umfasst:
Sammeln von Bildgebungsrückkopplungsparametern, die allen Teilobjekten entsprechen, die in jedem der Objekte (BB1, BS1, C1, C2, C3, C4, H1, H2, H3, H4, H5, H6, H7, H8) in verschiedenen Teilbildern (SI) enthalten sind, von jedem der Objekte (BB1, BS1, C1, C2, C3, C4, H1, H2, H3, H4, H5, H6, H7, H8) der Szene (S); und
Erstellen der Pareto-Menge jedes der Objekte (BB1, BS1, C1, C2, C3, C4, H1, H2, H3, H4, H5, H6, H7, H8) unter Verwendung eines Multi-Objective Simulated Annealing-Algorithmus gemäß den Bildgebungsrückkopplungsparametern und den optimierten optischen Parametern, die dem Teilobjekt entsprechen,
wobei jeder der Bildgebungsrückkopplungsparameter einen Bildqualitätsindikator und einen Bildgebungspositionsindikator umfasst,
wobei der Schritt des Zusammenfügens der Objekte (BB1, BS1, C1, C2, C3, C4, H1, H2, H3, H4, H5, H6, H7, H8) gemäß der Pareto-Menge jedes der Objekte (BB1, BS1, C1, C2, C3, C4, H1, H2, H3, H4, H5, H6, H7, H8) nach einer Fusion der Teilbilder (SI), um das Bild zu generieren, umfasst:
Fusionieren der Teilobjekte jedes der Objekte (BB1, BS1, C1, C2, C3, C4, H1, H2, H3, H4, H5, H6, H7, H8), die in die Pareto-Menge fallen, um mehrere fusionierte Bilder der Objekte (BB1, BS1, C1, C2, C3, C4, H1, H2, H3, H4, H5, H6, H7, H8) zu bilden; und
Zusammenfügen der fusionierten Bilder der Objekte (BB1, BS1, C1, C2, C3, C4, H1, H2, H3, H4, H5, H6, H7, H8) nach einer Fusion der Teilbilder (SI), um das vollständige Bild der Szene (S) zu generieren.

7. Verfahren zur Bildfusion nach Anspruch 6, wobei der Schritt des Analysierens der Teilbilder (SI), um die Objekte (100A, 100B, 100C, 100D, 100E, 100F) zu erhalten, die in der Szene (S) enthalten sind, umfasst:
Analysieren der Teilbilder (SI) unter Verwendung eines panoptischen Segmentierungsalgorithmus, um die Objekte (BB1, BS1, C1, C2, C3, C4, H1, H2, H3, H4, H5, H6, H7, H8) und deren Grenzen, die in jedem der Teilbilder (SI) enthalten sind, zu erhalten; und
Nummerieren der Objekte (BB1, BS1, C1, C2, C3, C4, H1, H2, H3, H4, H5, H6, H7, H8) gemäß den Objekttypen der Objekte (BB1, BS1, C1, C2, C3, C4, H1, H2, H3, H4, H5, H6, H7, H8), die in der Szene (S) enthalten sind.

8. Verfahren zur Bildfusion nach Anspruch 6, wobei jede der Kameras (100A, 100B, 100C, 100D, 100E, 100F) ein Photosensor aus komplementären Metall-Oxid-Halbleitern oder ein Photosensor aus ladungsgekoppelten Bauelementen ist.

9. Verfahren zur Bildfusion nach Anspruch 6, wobei der Schritt des Fusionierens der Teilobjekte jedes der Objekte (BB1, BS1, C1, C2, C3, C4, H1, H2, H3, H4, H5, H6, H7, H8), die in die Pareto-Menge fallen, um das fusionierte Bild jedes der Objekte (BB1, BS1, C1, C2, C3, C4, H1, H2, H3, H4, H5, H6, H7, H8) zu bilden, umfasst:
Verwenden eines nicht-starren Ausrichtungsalgorithmus zum Erstellen einer Ausrichtungsbasis gemäß den Teilobjekten, die in die Pareto-Menge fallen;
Auswählen eines Fusionsverfahrens gemäß einem Objekttyp jedes der Objekte (BB1, BS1, C1, C2, C3, C4, H1, H2, H3, H4, H5, H6, H7, H8); und
Fusionieren der Teilobjekte jedes der Objekte (BB1, BS1, C1, C2, C3, C4, H1, H2, H3, H4, H5, H6, H7, H8), die in die Pareto-Menge fallen, gemäß der Ausrichtungsbasis und dem Fusionsverfahren.

10. Verfahren zur Bildfusion nach Anspruch 9, wobei das Fusionsverfahren eine diskrete Wavelet-Transformation, eine einheitliche rationale Filterbank oder eine Laplacesche Pyramide umfasst.

## Revendications

1. Système de photographie (10), comprenant :
une pluralité de caméras (100A, 100B, 100C, 100D, 100E, 100F), photographiant une scène (S) pour produire une pluralité de sous-images (SI) ; et
un dispositif de commande (200), connecté par signal aux caméras (100A, 100B, 100C, 100D, 100E, 100F) pour obtenir les sous-images (SI),
dans lequel le dispositif de commande (200) analyse les sous-images (SI) pour obtenir une pluralité d'objets (BG, O1, O2) contenus dans la scène (S), et le dispositif de commande (200) établit un ensemble de Pareto de chacun des objets (BG, O1, O2), le dispositif de commande (200) assemble les objets (BG, O1, O2) selon l'ensemble de Pareto de chacun des objets (BG, O1, O2) pour générer une image complète de la scène (S) après une fusion des sous-images (SI), chacun des objets (BB1, BS1, C1, C2, C3, C4, H1, H2, H3, H4, H5, H6, H7, H8) comprend au moins un sous-objet, et chaque sous-objet est une plage d'images dans laquelle l'objet (BB1, BS1, C1, C2, C3, C4, H1, H2, H3, H4, H5, H6, H7, H8) respectif apparaît à l'intérieur d'une sous-image respective des sous-images (SI) des caméras (100A, 100B, 100C, 100D, 100E, 100F) qui capturent l'objet (BB1, BS1, C1, C2, C3, C4, H1, H2, H3, H4, H5, H6, H7, H8),
dans lequel le dispositif de commande (200) calcule des paramètres optiques optimisés selon des paramètres optiques respectifs des caméras (100A, 100B, 100C, 100D, 100E, 100F) ; et
le dispositif de commande (200) collecte des paramètres de rétroaction d'imagerie correspondant à tous les sous-objets inclus dans chacun des objets (BB1, BS1, C1, C2, C3, C4, H1, H2, H3, H4, H5, H6, H7, H8) dans des sous-images (SI) différentes à partir de chacun des objets (BB1, BS1, C1, C2, C3, C4, H1, H2, H3, H4, H5, H6, H7, H8) de la scène (S), et établit l'ensemble de Pareto de chacun des objets (BB1, BS1, C1, C2, C3, C4, H1, H2, H3, H4, H5, H6, H7, H8) à l'aide d'un algorithme de recuit simulé à objectifs multiples selon les paramètres de rétroaction d'imagerie et les paramètres optiques optimisés correspondant au sous-objet,
dans lequel chacun des paramètres de rétroaction d'imagerie comprend un indicateur de qualité d'image et un indicateur de position d'imagerie,
dans lequel le dispositif de commande (200) fusionne les sous-objets de chacun des objets (BB1, BS1, C1, C2, C3, C4, H1, H2, H3, H4, H5, H6, H7, H8) se trouvant dans l'ensemble de Pareto pour former une pluralité d'images fusionnées des objets (BB1, BS1, C1, C2, C3, C4, H1, H2, H3, H4, H5, H6, H7, H8), et assemble les images fusionnées des objets (BB1, BS1, C1, C2, C3, C4, H1, H2, H3, H4, H5, H6, H7, H8) pour générer l'image complète de la scène (S) après une fusion des sous-images (SI).

2. Système de photographie (10) selon la revendication 1, dans lequel le dispositif de commande (200) analyse les sous-images (SI) à l'aide d'un algorithme de segmentation panoptique pour obtenir les objets (BB1, BS1, C1, C2, C3, C4, H1, H2, H3, H4, H5, H6, H7, H8) et leurs limites inclus dans chacune des sous-images (SI), et numérote les objets (BB1, BS1, C1, C2, C3, C4, H1, H2, H3, H4, H5, H6, H7, H8) selon des types d'objets des objets (BB1, BS1, C1, C2, C3, C4, H1, H2, H3, H4, H5, H6, H7, H8) inclus dans la scène (S) pour obtenir les objets (BB1, BS1, C1, C2, C3, C4, H1, H2, H3, H4, H5, H6, H7, H8) inclus dans la scène (S).

3. Système de photographie (10) selon la revendication 1, dans lequel les paramètres optiques de chacune des caméras (100A, 100B, 100C, 100D, 100E, 100F) comprennent une ouverture, une longueur focale, une sensibilité, une balance des blancs, ou une résolution.

4. Système de photographie (10) selon la revendication 1, dans lequel le dispositif de commande (200) utilise un algorithme d'alignement non rigide pour établir une base d'alignement selon les sous-objets se trouvant dans l'ensemble de Pareto, puis sélectionne une méthode de fusion selon un type d'objet de chacun des objets (BB1, BS1, C1, C2, C3, C4, H1, H2, H3, H4, H5, H6, H7, H8), et fusionne les sous-objets de chacun des objets (BB1, BS1, C1, C2, C3, C4, H1, H2, H3, H4, H5, H6, H7, H8) se trouvant dans l'ensemble de Pareto selon la base d'alignement et la méthode de fusion.

5. Système de photographie (10) selon la revendication 1, dans lequel les paramètres optiques de chacune des caméras (100A, 100B, 100C, 100D, 100E, 100F) comprennent une capacité de charge maximale, une capacité de saturation, un bruit d'obscurité temporel, une plage dynamique, un rendement quantique ou un facteur K.

6. Procédé de fusion d'images, comprenant :
le calcul de paramètres optiques optimisés selon des paramètres optiques respectifs d'une pluralité de caméras (100A, 100B, 100C, 100D, 100E, 100F) ;
la photographie d'une scène (S) à l'aide des caméras (100A, 100B, 100C, 100D, 100E, 100F) pour obtenir une pluralité de sous-images (SI) ;
l'analyse des sous-images (SI) pour obtenir une pluralité d'objets (BG, O1, O2) contenus dans la scène (S) ;
l'établissement d'un ensemble de Pareto de chacun des objets (BG, O1, O2) ; et
l'assemblage des objets (BG, O1, O2) selon l'ensemble de Pareto de chacun des objets (BG, O1, O2) pour générer une image complète de la scène (S) après une fusion des sous-images (SI), dans lequel chacun des objets (BB1, BS1, C1, C2, C3, C4, H1, H2, H3, H4, H5, H6, H7, H8) comprend au moins un sous-objet, et chaque sous-objet est une plage d'images dans laquelle l'objet (BB1, BS1, C1, C2, C3, C4, H1, H2, H3, H4, H5, H6, H7, H8) respectif apparaît à l'intérieur d'une sous-image respective des sous-images (SI) des caméras (100A, 100B, 100C, 100D, 100E, 100F) qui capturent l'objet (BB1, BS1, C1, C2, C3, C4, H1, H2, H3, H4, H5, H6, H7, H8), et l'étape d'établissement de l'ensemble de Pareto de chacun des objets (BB1, BS1, C1, C2, C3, C4, H1, H2, H3, H4, H5, H6, H7, H8) comprend :
la collecte de paramètres de rétroaction d'imagerie correspondant à tous les sous-objets inclus dans chacun des objets (BB1, BS1, C1, C2, C3, C4, H1, H2, H3, H4, H5, H6, H7, H8) dans des sous-images (SI) différentes à partir de chacun des objets (BB1, BS1, C1, C2, C3, C4, H1, H2, H3, H4, H5, H6, H7, H8) de la scène (S) ; et
l'établissement de l'ensemble de Pareto de chacun des objets (BB1, BS1, C1, C2, C3, C4, H1, H2, H3, H4, H5, H6, H7, H8) à l'aide d'un algorithme de recuit simulé à objectifs multiples selon les paramètres de rétroaction d'imagerie et les paramètres optiques optimisés correspondant au sous-objet,
dans lequel chacun des paramètres de rétroaction d'imagerie comprend un indicateur de qualité d'image et un indicateur de position d'imagerie,
dans lequel l'étape d'assemblage des objets (BB1, BS1, C1, C2, C3, C4, H1, H2, H3, H4, H5, H6, H7, H8) selon l'ensemble de Pareto de chacun des objets (BB1, BS1, C1, C2, C3, C4, H1, H2, H3, H4, H5, H6, H7, H8) pour générer l'image après une fusion des sous-images (SI) comprend :
la fusion des sous-objets de chacun des objets (BB1, BS1, C1, C2, C3, C4, H1, H2, H3, H4, H5, H6, H7, H8) se trouvant dans l'ensemble de Pareto pour former une pluralité d'images fusionnées des objets (BB1, BS1, C1, C2, C3, C4, H1, H2, H3, H4, H5, H6, H7, H8) ; et
l'assemblage des images fusionnées des objets (BB1, BS1, C1, C2, C3, C4, H1, H2, H3, H4, H5, H6, H7, H8) pour générer l'image complète de la scène (S) après une fusion des sous-images (SI).

7. Procédé de fusion d'images selon la revendication 6, dans lequel l'étape d'analyse des sous-images (SI) pour obtenir les objets (100A, 100B, 100C, 100D, 100E, 100F) contenus dans la scène (S) comprend :
l'analyse des sous-images (SI) à l'aide d'un algorithme de segmentation panoptique pour obtenir les objets (BB1, BS1, C1, C2, C3, C4, H1, H2, H3, H4, H5, H6, H7, H8) et leurs limites inclus dans chacune des sous-images (SI) ; et
la numérotation des objets (BB1, BS1, C1, C2, C3, C4, H1, H2, H3, H4, H5, H6, H7, H8) selon des types d'objets des objets (BB1, BS1, C1, C2, C3, C4, H1, H2, H3, H4, H5, H6, H7, H8) inclus dans la scène (S).

8. Procédé de fusion d'images selon la revendication 6, dans lequel chacune des caméras (100A, 100B, 100C, 100D, 100E, 100F) est un photocapteur de semi-conducteur métal-oxyde complémentaire ou un photocapteur de dispositifs à couplage de charge.

9. Procédé de fusion d'images selon la revendication 6, dans lequel l'étape de fusion des sous-objets de chacun des objets (BB1, BS1, C1, C2, C3, C4, H1, H2, H3, H4, H5, H6, H7, H8) se trouvant dans l'ensemble de Pareto pour former l'image fusionnée de chacun des objets (BB1, BS1, C1, C2, C3, C4, H1, H2, H3, H4, H5, H6, H7, H8) comprend :
l'utilisation d'un algorithme d'alignement non rigide pour établir une base d'alignement selon les sous-objets se trouvant dans l'ensemble de Pareto ;
la sélection d'une méthode de fusion selon un type d'objet de chacun des objets (BB1, BS1, C1, C2, C3, C4, H1, H2, H3, H4, H5, H6, H7, H8) ; et
la fusion des sous-objets de chacun des objets (BB1, BS1, C1, C2, C3, C4, H1, H2, H3, H4, H5, H6, H7, H8) se trouvant dans l'ensemble de Pareto selon la base d'alignement et la méthode de fusion.

10. Procédé de fusion d'images selon la revendication 9, dans lequel la méthode de fusion comprend une transformée en ondelettes discrète, un banc de filtres rationnels uniformes ou une pyramide laplacienne.
